# EUROPÄISCHE PATENTANMELDUNG

(11) **EP 0 849 592 A2**
(43) Veröffentlichungstag der Anmeldung: **24.06.1998**
(21) Anmeldenummer: 97120672.7
(22) Anmeldetag: 26.11.1997
(51) Int. Cl.: G01N 29/02, G01N 29/14

(54) **Verfahren zum Überwachen der Funktion eines Sprühstrahls**

(30) Priorität: 12.12.1996 DE 19651702
(71) Anmelder: Küchen, Jörg, 52146 Würselen (DE)
(72) Erfinder: Küchen, Jörg, 52146 Würselen (DE)
(74) Vertreter: Castell, Klaus, Dr.

(57) **Zusammenfassung**

Zur Überwachung der Funktion eines Sprühstrahls wird die Verwendung eines akustischen Systems vorgeschlagen, bei dem aus dem Geräusch des Sprühstrahls ein Nutzsignal ermittelt wird und das Nutzsignal zur Beurteilung der Funktion des Sprühstrahls analysiert wird. Derartige Anlagen sind weniger verschmutzungsempflindlich als optische Einrichtungen und erlauben eine genaue Analyse der Sprühstrahlqualität. Ein bevorzugtes Anwendungsgebiet der Erfindung liegt in der Überwachung der Funktion von Lackieranlagen.

## Beschreibung

Die Anmeldung betrifft ein Verfahren zum Überwachen der Funktion eines Sprühstrahls, gemäß dem Oberbegriffs des Anspruchs 1.

Ein solches Verfahren ist aus der DE 41 41 665 A1 bekannt.

Ein Sprühstrahl ist jeder aus einer Düse oder einem Auslaß austretende Fluidstrom, wie etwa ein Flüssigkeitsstrom, ein Gasstrom oder ein Partikelstrom.

Bei allen Anwendungen von Düsen oder Auslässen besteht das Problem des vollständigen oder teilweisen Verstopfens der Düse oder des Auslasses durch Ablagerungen im Düsen- oder Auslaßbereich oder durch grobere Partikel im Fluidstrom und darüber hinaus kann die Düse selbst verschleißen und dadurch in ihrer Funktion beeinträchtigt werden. Daher muß bei der Überwachung der Funktion eines Sprühstrahls zum einen erkannt werden, ob ein Sprühvorgang vorliegt oder nicht, und andererseits muß die Qualität des Sprühvorgangs ermittelt werden, um rechtzeitig die Düse bzw. den Auslaß austauschen oder reinigen zu können.

Ausgehend von einem Verfahren gemäß dem Oberbegriff des Patentanspruchs 1 liegt der Erfindung die Aufgabe zugrunde, dieses Verfahren derart weiterzubilden, daß es weitgehend verschmutzungsunempfindlich ist und eine qualitative Beurteilung der Funktion des Sprühstrahls erlaubt.

Diese Aufgabe wird bei einem Verfahren gemäß dem Oberbegriff des Patentanspruchs 1 mit den kennzeichnenden Merkmalen des Patentanspruchs 1 gelöst.

Die Verwendung einer akustischen Sensorik zur Überwachung der Funktion eines Sprühstrahls bringt den großen Vorteil, daß die als Sensoren verwendeten Mikrofone viel verschmutzungsunempfindlicher als optische Sensoren wie bspw. Lichtschranken sind. Außerdem erlaubt die akustische Sensorik eine sehr genaue Analyse der Sprühstrahlfunktion, da schon eine geringe Variation der Düsenfunktion eine beträchtliche Änderung in Frequenz und Amplitude der ermittelten Schallwellen bedingt. Die akustische Sensorik erlaubt außerdem eine Überwachung des Sprühdruckes.

Erfindungsgemäß wird aus dem Geräusch in der Nähe des Sprühstrahls ein erstes Signal ermittelt, aus dem Geräusch in der weiteren Umgebung ein zweites Signal ermittelt und aus beiden Signalen das Nutzsignal separiert, das zur Beurteilung der Funktion des Sprühstrahls analysiert wird. Die Ermittlung dieser beiden Geräusche, vorzugsweise mit zwei Mikrofonen, führt dazu, daß insbesondere bei lauten Umgebungsgeräuschen die Störsignale eliminiert werden können. Das in der Nähe des Sprühstrahls angeordnete Mikrofon hat dabei eine Richtcharakteristik und ermittelt Nutz- und Störsignal, während ein weiteres Mikrofon mit einer Kugelcharakteristik, das etwas weiter vom Sprühstrahl entfernt angeordnet ist, hauptsächlich das Störsignal erfaßt. Dies erlaubt es, aus dem Vergleich der ermittelten Geräusche ein weitgehend um das Störsignal bereinigtes Nutzsignal zu separieren.

Eine bevorzugte Ausgestaltung der Erfindung sieht vor, daß die Geräusche digitalisiert werden und mit einer Kompensationsschaltung das Nutzsignal separiert wird. Die mit den Mikrofonen gemessenen Geräusche werden dabei getrennt Analogdigital-Wandlern zugeführt und die digitalisierten Signale werden einer Kompensationsschaltung zugeführt, uni das Nutzsignal zu ermitteln. Die Kompensationsschaltung besteht bspw. aus linearphasigen FIR-Filtern ("Wienerfilter"). Falls sich das Störgeräusch verändert, kann eine iterative Nachstellung vorgesehen werden.

Die Analyse des Nutzsignals kann bspw. dadurch erfolgen, daß die Abweichung des Signals von einen, Sollwert erfaßt und bei Überschreitung einer maximalen Abweichung ein Alarmsignal ausgegeben wird. Besonders vorteilhaft ist es jedoch, wenn das Nutzsignal mit einer Referenz verglichen wird und der Ähnlichkeitsgrad mit der Referenz angezeigt wird. Als Referenz dient bspw. ein "sauberer" Sprühstrahl ohne Hintergrundgeräusche und der Vergleich des Nutzsignals mit dieser Referenz zeigt die Abweichung vom Optimum als Ähnlichkeitsgrad. Dieser Ähnlichkeitsgrad gibt die Qualität des Sprühstrahls an und für die Abweichungen in Frequenz oder Amplitude oder allgemein vom vorgegebenen Muster kann ein Grenzwert angegeben werden, bei dessen Überschreitung dem Bedienungspersonal angezeigt wird, daß die Düse ausgewechselt werden muß. Der Vergleich zwischen Nutzsignal und Referenzsignal wird vorzugsweise über die Kreuzkorellationsfunktion durchgeführt, wobei auch unscharfe Werte ausgegeben werden können, die dann Aussagen über die Art des Sprühstrahls erlauben.

Eine bevorzugte Variante des erfindungsgem. Verfahrens sieht vor, daß der Vergleich zwischen Nutzsignal und Referenz in einem bestimmten Frequenzspektrum durchgeführt wird. Dieses Frequenzspektrum kann genau auf die Aufgabenstellung abgestimmt sein und erlaubt es, bei reduzierter Rechenleistung einen Vergleich im kritischen Bereich durchzuführen. Eine starke Einschränkung des zum Vergleich benötigten Frequenzspektrums reduziert außerdem die Wahrscheinlichkeit von Störsignalen aus der Umgebung und erschließt die Möglichkeit, bei bestimmten Einsatzgebieten auf eine Störsignaleliminierung zu verzichten.

Eine Verwendung des beschriebenen Verfahrens liegt in der Überwachung der Funktion von Lackieranlagen. Gerade bei Lackieranlagen besteht das Fluid des Sprühstrahls meist aus besonders schwer entfernbaren Lacken, die schnell die optische Sensorik bekannter Lichtschrankensysteme verschmutzen. Daher müssen vorallem bei bewegten Systemen, wie Lackierrobotern die Elemente der herkömmlichen optischen Sensorik regelmäßig gereinigt und neu justiert werden. Außerdem ist bisher ein prophylaktisches Auswechseln der Lackierdüse nicht zu vermeiden.

Durch die Verwendung des erfindungsgem. Verfahrens zur Überwachung der Funktion von Lackieranlagen entfällt das prophylaktische Auswechseln der Düse und die Reinigung der Lichtschrankensysteme und die notwendige Rüstzeit reduziert sich dadurch auf den Austausch der Düse, in den Fällen, in denen die Düse ihre Funktion nicht mehr erfüllt. Durch das rechtzeitige Austauschen der Düse wird Produktausschuß, der ansonsten durch schlechtes Lackieren entsteht, verhindert und eine leichte Prozeßübenwachung ermöglicht.

Ein Ausführungsbeispiel zur Durchführung des erfindungsgem. Verfahrens ist in der Zeichnung dargestellt und wird im Folgenden näher beschrieben.

Es zeigt
- Figur 1: schematisch den Aufbau einer akustischen Sprühstrahlüberwachung und
- Figur 2: schematisch die Behandlung der gemessenen Signale.

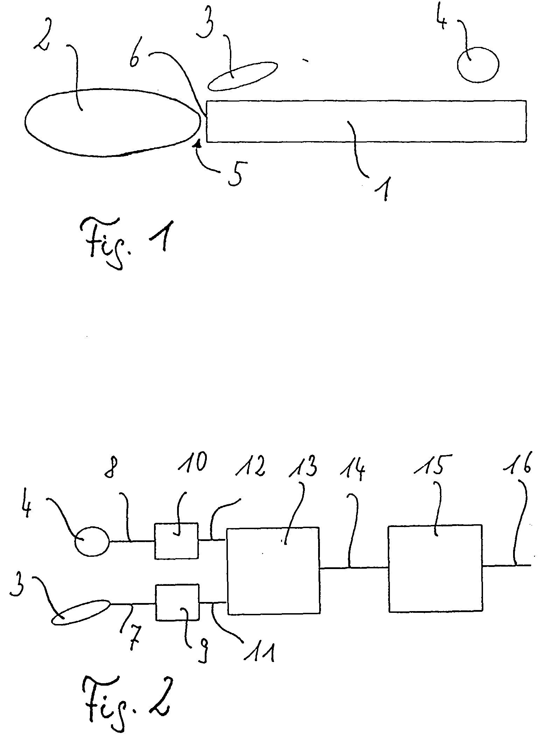

Die in Figur 1 gezeigte typische Anordnung des Aufbaus einer akustischen Sprühstrahlüberwachung besteht aus der Sprühpistole 1, die den Sprühstrahl 2 erzeugt, und zwei Mikrofonen 3 und 4. Das Mikrofon 3 hat eine Richtcharakteristik, die zum Übergangsbereich 5 zwischen der Sprühpistole 1 und dem Sprühstrahl 2 weist, während das Mikrofon 4 eine Kugelcharakteristik aufweist und weiter als das Mikrofon 3 vom Sprühstrahl entfernt angeordnet ist.

Der angegebenen Anordnung ist leicht zu entnehmen, daß das Mikrofon 3 in der Nähe des Sprühstrahls überwiegend das Geräusch des Sprühstrahls beim Verlassen der Düse 6 am Ende der Sprühpistole 1 erfaßt und das Mikrofon 4 überwiegend die Umgebungsgeräusche, die als Störgeräusche zu werten sind.

Die in Figur 2 gezeigte Anordnung erläutert die Verarbeitung der gemessenen Geräusche. Die mit den Mikrofonen 3 und 4 ermittelten Geräusche werden als analoges Signal 7, 8 getrennt, jeweils auf einen Analog-Digital-Wandler 9, 10 gegeben, der die analogen Geräuschsignale 7, 8 in ein erste digitales Signal 11 und ein zweites digitales Signal 12 umwandelt. Die digitalisierten Signale 11 und 12 werden dann einem ersten digitalen Signalprozessor 13 zugeführt, der mittels einer Kompensationsschaltung aus linearphasigen FIR Filtern und einer iterativen Nachstellung aus den beiden Signale 11 und 12 ein Nutzsignal 14 errechnet. Das Nutzsignal 14 hat somit den Vorteil, daß Störgeräusche, die nicht durch den Sprühstrahl 2 bedingt sind, aus dem Signal eliminiert sind.

Dieses Nutzsignal 14 wird in einem zweiten digitalen Signalprozessor 15 mit einer Referenz verglichen und anschließend wird der Ähnlichkeitsgrad zwischen Nutzsignal und Referenz als Ergebnis 16 ausgegeben. Der digitale Signalprozessor 15 ermittelt über eine Kreuzkorrelationsfunktion die Ähnlichkeit, die als Maß zur Beurteilung der Funktion des Sprühstrahls 2 dient.

Obwohl in Figur 2 zwei digitale Signalprezessoren 13 und 15 eingezeichnet sind, ist es in der Praxis sinnvoll, sowohl die Kompensationsschaltung als auch die Kreuzkorrelation mit dem gleichen digitalen Signalprozessor durchzuführen, da es nicht notwendig ist, zeitkontinuierlich zu messen. Für besonders zeitkritische Prozessüberwachungsaufgaben ist es jedoch möglich, mit zwei digitalen Signalprozessoren oder einem digitalen Signalprozessor mit besonders hoher Rechenieistung auch eine kontinuierliche oder quasi kontinuierliche Messung durchzuführen.

Als digitaler Signalprozessor eignet sich bspw. ein Model Motorolla 62002. Außerdem ist ein Steuerprozessor notwendig, der in der schematischen Zeichnung in Figur 2 nicht dargestellt ist und bspw. ein Siemensprozessor 5052 sein kann. Die notwendigen Kosten zur Realisierung der gesamten Anlage sind somit extrem gering und liegen etwa im Kostenbereich einer üblichen Lichtschranke. Außerdem fallen beim erfindungsgem. Verfahren im wesentlichen keine Betriebskosten an.

Eine vorteilhafte Anwendung des erfindungsgemäßen Verfahrens liegt in der Kontrolle der Entleerung von Siloanlagen. Da das Geräusch am Auslaß des Silos der am Auslaß austretenden Gutmenge entspricht, ist mit dem erfindungsgemäßen Verfahren und der Berücksichtigung der Zeit, während der das Geräusch vorliegt, der das Silo verlassende Strom, die Größe der Charge und der im Silo verbleibende Rest zu ermitteln.

## Patentansprüche

1. Verfahren zum Überwachen der Funktion eines Sprühstrahls (2), bei dem aus dem Geräusch in der Nähe des Sprühstrahls (2) ein erstes Signal (11) ermittelt wird, und zur Beurteilung der Funktion des Sprühstrahls (2) analysiert wird, **dadurch gekennzeichnet, daß** aus dein Geräusch in der weiteren Umgebung des Sprühstrahls ein zweites Signal (12) ermittelt wird, aus dein ersten und zweiten Signal (11, 12) ein Nutzsignal (14) separiert wird und das Nutzsignal (14) zur Beurteilung der Funktion des Sprühstrahls (2) analaysiert wird.

2. Verfahren nach Anspruch 1, **dadurch gekennzeichnet, daß** die Geräusche digitalisiert werden und mit einer Kompensationsschaltung das Nutzsignal (14) separiert wird.

3. Verfahren nach einem der vorhergehenden Ansprüche, **dadurch gekennzeichnet, daß** das Nutzsignal (14) mit einer Referenz verglichen wird und der Ähnlichkeitsgrad (16) mit der Referenz angezeigt wird.

4. Verfahren nach Anspruch 3, **dadurch gekennzeichnet, daß** der Vergleich in einem bestimmten Frequenzspektrum durchgeführt wird.

5. Verwendung eines Verfahrens nach einem der Ansprüche 1 bis 4 zur Überwachung der Funktion von Lackieranlagen.
